**Europäisches Patentamt**

**European Patent Office**

**Office européen des brevets**

(11) Veröffentlichungsnummer: **0 105 830**
**B1**

(12) ## EUROPÄISCHE PATENTSCHRIFT

(45) Veröffentlichungstag der Patentschrift:
**11.05.88**

(21) Anmeldenummer: **83710038.7**

(22) Anmeldetag: **16.06.83**

(51) Int. Cl.⁴: **B 60 J 1/10,** B 61 D 25/00,
B 62 D 27/02

(54) **Fahrzeugfenster, insbesondere Seitenfenster von Reisezugwagen.**

(30) Priorität: **03.09.82 DE 3232783**

(43) Veröffentlichungstag der Anmeldung:
**18.04.84 Patentblatt 84/16**

(45) Bekanntmachung des Hinweises auf die Patenterteilung:
**11.05.88 Patentblatt 88/19**

(84) Benannte Vertragsstaaten:
**AT CH DE FR GB IT LI**

(56) Entgegenhaltungen:
**EP - A - 0 009 246**
**US - A - 3 468 738**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Riegler, Manfred, Dipl.-Ing., Wiesenstrasse 3,
D-8011 Brunnthal (DE)**

## Beschreibung

Die Erfindung betrifft ein Fahrzeugfenster gemäss dem Oberbegriff des Patentanspruchs 1.

Bei einem derartigen gemäss der DE-A-2 841 177 (EP-A-0 009 246) für Omnibusse bevorzugten Fahrzeugfenster ermöglichen die Klebstoffschichten einen mit dem Fensterausschnitt der Fahrzeugwandung bündigen Einbau der Fensterscheibe, was zur Minderung der Wirksamkeit der aerodynamischen Kräfte bedeutsam ist. Hierbei sollen die Klebstoffschichten Schubkräfte zwischen dem Fensterrahmen und der Fensterscheibe übertragen können, um sicherzustellen, dass die Fensterscheibe zugleich die Funktion eines tragenden Bauteils der Fahrzeugwandung erfüllt. Folglich kommt der Sicherheit der Klebverbindung eine beträchtliche Bedeutung zu, wobei es naturgemäss nicht nur auf den Klebstoff, sondern auch auf die Grösse der wirksamen Haftfläche ankommt. Diesbezüglich stellt sich durch die Verwendung der Doppel- oder Mehrfachscheibe das Problem einer wirksamen Einbeziehung sämtlicher Teilscheiben des Aufbaus der Fensterscheibe für deren Schubkraftaufnahme, wozu die in der vorgenannten DE-A-2 841 177 (EP-A-0 009 246) angewendete Einscheibenklebung keine Lösung ist. Das gilt vor allem für die Fenster von klimatisierten Reisezugwagen des Schienenverkehrs, welche bekanntlich aus Gründen der Wärme- und Schallisolierung auf solche Doppel- oder Mehrfachfensterscheiben angewiesen sind, deren Teilscheiben zueinander auf Distanz gehalten sind.

Der Erfindung liegt die Aufgabe zugrunde, bei einem Fahrzeugfenster der eingangs genannten Art die Fensterscheibe als tragendes Bauteil der Fahrzeugwandung besser auszunutzen.

Diese Aufgabe ist gemäss dem Kennzeichen des Patentanspruchs 1 gelöst, nämlich durch Vergrössern der wirksamen Haftfläche zwischen der Fensterscheibe und dem Fensterrahmen im Wege einer Gestaltung desselben derart, dass unter geringstmöglicher Änderung des Luftwiderstandsbeiwertes der Fahrzeugwandung zumindest die Innen- und Aussenscheibe der Fensterscheibe gesondert über eine Klebstoffschicht fixierbar ist. Dies wird nachfolgend anhand eines Ausführungsbeispiels der Erfindung verdeutlicht, wobei auch auf deren in den Unteransprüchen gekennzeichneten Weiterbildungen eingegangen wird. Die Zeichnung zeigt dazu in

Fig. 1 einen Ausschnitt einer Fahrzeugwandung im Fensterbereich,

Fig. 2 einen Schnitt gemäss Schnittlinie II–II der Fig. 1.

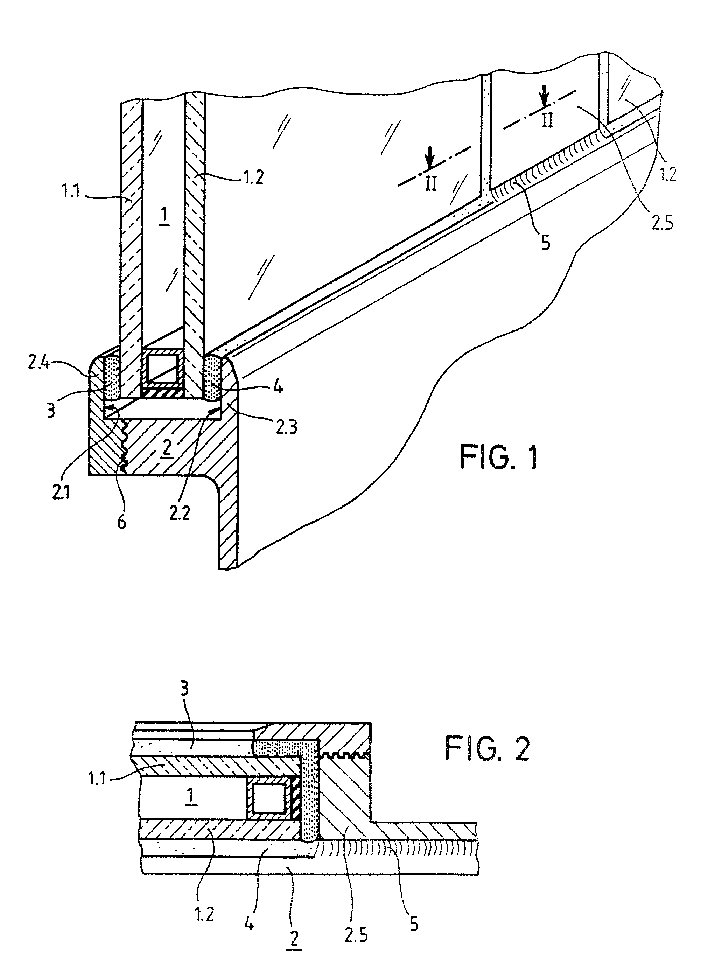

Um die als Doppelscheibe ausgebildete Fensterscheibe 1 des einzelnen Seitenfensters eines Reisezugwagens voll als tragendes Bauteil der Wagenseitenwand heranziehen zu können, ist jene in einem Fensterrahmen 2 so eingeklebt, dass deren Innen- und Aussenscheibe 1.1 bzw. 1.2 jeweils über eine eigene Klebstoffschicht 3 bzw. 4 fixiert ist und somit für sich Schubkräfte aufzunehmen und zu übertragen vermag. Für den Fensterrahmen 2, vorzugsweise als integralen Bestandteil der Wagenseitenwand, ist hierzu an den beiden Fensterlängsseiten ein im Querschnitt U-förmiges Profil gewählt, dessen einander gegenüberstehende Innenflächen 2.1, 2.2 beide Anschlag- und Klebeflächen der Fensterscheibe 1 sind. Um hierbei eine fugenfreie Oberfläche der Wagenseitenwand beizubehalten, ist der der Aussenscheibe 1.2 zugeordnete U-Schenkel 2.3 ein einstückiger Fortsatz der Wagenseitenwand. Der gegenüber deren Aussenfläche in Kauf genommene Versatz der Fensterscheibe 1 ist von unwesentlichem Einfluss, sofern, wie insbesondere Fig. 2 zeigt, der jeweils zwischen zwei Fensterscheiben 1 sitzende Fensterpfosten 2.5 bündig zu den Aussenscheiben 1.2, also gegenüber dem übrigen Rahmenprofil bzw. äusseren U-Schenkel 2.3 nach innen versetzt ist, beispielsweise unter Zwischenfügung einer Schweissnaht 5 von der Dicke der äusseren Klebstoffschicht 4.

Im übrigen sind die beiden U-Schenkel 2.3, 2.4 des Fensterrahmens 2 aufgrund einer sich im Profilboden längserstreckenden Verbindungsfuge 6 voneinander trennbar, um sowohl die Montage als auch eine Demontage der Fensterscheibe 1 zu erleichtern, beispielsweise das Entfernen von Glasresten bei beschädigter Fensterscheibe 1; für die U-Schenkel 2.3, 2.4 ist dazu eine Schraubverbindung bevorzugt. Da für die Schubkraftübertragung auch nach vielfachem Scheibenaustausch noch Formschluss zwischen den U-Schenkeln 2.3, 2.4 des Fensterrahmens 2 bestehen muss, weisen die Stossflächen der Verbindungsfuge 6 eine die U-Schenkel gegen Querverschiebung sichernde Verzahnung auf.

Als Klebstoff kommt beispielsweise eine Klebdichtungsmasse auf Polyurethanbasis in Betracht.

### Patentansprüche

1. Fahrzeugfenster, insbesondere Seitenfenster von Reisezugwagen, dessen Fensterscheibe (1) in Form einer Doppel- oder Mehrfachscheibe in einem profilierten Fensterrahmen (2) über Klebstoffschichten (3, 4) feststehend angeordnet ist, dadurch gekennzeichnet, dass wenigstens an den beiden, oberer und unterer, Fensterlängsseiten der Fensterrahmen (2) ein im Querschnitt U-förmiges Profil hat und dessen einander gegenüberstehende Innenflächen (2.1, 2.2) beide Anschlag- und Klebeflächen der Fensterscheibe (1) sind, wobei der deren Aussenscheibe (1.2) zugeordnete U-Schenkel (2.3) ein einstückiger Fortsatz der Fahrzeugwandung ist.

2. Fahrzeugfenster nach Anspruch 1, dadurch gekennzeichnet, dass die beiden U-Schenkel (2.3, 2.4) des im Querschnitt U-förmigen Profils aufgrund einer sich im Profilboden längserstreckenden Verbindungsfuge (6) voneinander trennbar sind.

3. Fahrzeugfenster nach Anspruch 2, dadurch gekennzeichnet, dass die Stossflächen der Verbindungsfuge (6) eine die U-Schenkel (2.3, 2.4) gegen Querverschiebung sichernde Verzahnung aufweisen.

4. Fahrzeugfenster nach Anspruch 1, dadurch gekennzeichnet, dass, unter Beschränkung der U-förmigen Profilierung des Fensterrahmens (2) auf die beiden Fensterlängsseiten, der jeweilige Fensterpfosten (2.5) zwischen zwei Fensterscheiben (1) bündig zu den Aussenscheiben (1.2) angeordnet ist.

5. Fahrzeugfenster nach Anspruch 4, gekennzeichnet durch die Zwischenfügung einer Schweissnaht (5) zwischen dem Fensterpfosten (2.5) und dem Fensterrahmenprofil.

## Claims

1. A vehicle window, more especially a side window of a passenger train carriage the window-pane (1) of which is in the form of a double or multiple pane fixedly disposed in a profiled window-frame (2) by means of layers of adhesive (3, 4), characterised in that at least at the two, upper and lower, longitudinal sides of the window the window-frame (2) has a profile which is U-shaped in cross-section and the mutually opposite inner surfaces (2.1, 2.2) of which are both stop and adhesion surfaces of the window-pane (1), in which respect the U-limb (2.3) associated with the outer pane (1.2) is an integral extension of the vehicle wall.

2. A vehicle window according to claim 1, characterised in that the two U-limbs (2.3, 2.4) of the profile which is U-shaped in cross-section are separable from one another by virtue of a connecting joint (6) extending longitudinally in the profile base.

3. A vehicle window according to claim 2, characterised in that the abutting surfaces of the connecting joint (6) have a toothing which secures the U-limbs (2.3, 2.4) against transverse displacement.

4. A vehicle window according to claim 1, characterised in that, along with a restriction of the U-shaped profiling of the window-frame (2) to the two longitudinal sides of the window, the respective window jamb (2.5) arranged between two window-panes (1) is flush with the outer panes (1.2).

5. A vehicle window according to claim 4, characterised by the interpolation of a welding seam (5) between the window jamb (2.5) and the window-frame profile.

## Revendications

1. Fenêtre de véhicule, en particulier fenêtre latérale de voiture de trains de voyageurs, dont la vitre (1) réalisée sous la forme d'une vitre double ou multiple est placée fixe dans un cadre de fenêtre profilé (2) à l'aide de couches de colle (3, 4), caractérisée en ce que le cadre de fenêtre (2) possède, au moins sur les deux côtés longitudinaux supérieur et inférieur de la fenêtre, un profil ayant une section transversale en U et dont les deux surfaces intérieures (2.1, 2.2) se faisant face sont les deux surfaces de butée et de collage de la vitre (1), l'aile (2.3) du U associée à la vitre extérieure (1.2) étant un prolongement d'une seule pièce de la paroi du véhicule.

2. Fenêtre de véhicule selon la revendication 1, caractérisée en ce que les deux ailes (2.3, 2.4) du profilé de section transversale en U peuvent être séparées l'une de l'autre du fait d'un joint d'assemblage (6) s'étendant longitudinalement dans le fond du profilé.

3. Fenêtre de véhicule selon la revendication 2, caractérisée en ce que les surfaces de contact du joint d'assemblage (6) présentent une denture empêchant un déplacement transversal des ailes (2.3, 2.4) du U.

4. Fenêtre de véhicule selon la revendication 1, caractérisée en ce que, le profil en U du cadre de fenêtre (2) étant prévu uniquement sur les deux côtés longitudinaux de la fenêtre, le montant de fenêtre (2.5) est placé entre deux vitres (1) au-raz des vitres extérieures (1.2).

5. Fenêtre de véhicule selon la revendication 4, caractérisée par l'insertion d'un cordon de soudure (5) entre le montant de fenêtre (2.5) et le profilé de cadre de fenêtre.

FIG. 1

FIG. 2